# EUROPÄISCHE PATENTANMELDUNG

(11) **EP 3 106 736 A1**
(43) Veröffentlichungstag der Anmeldung: **21.12.2016**
(21) Anmeldenummer: 15172816.9
(22) Anmeldetag: 19.06.2015
(51) Int. Cl.: F16L 59/135, F16L 59/02

(54) **ROHRTRÄGER**

(71) Anmelder: HILTI Aktiengesellschaft, 9494 Schaan (LI)
(72) Erfinder: Kuhnel, Erik, 9472 Grabs (CH); Ohm, Konstantin, 7320 Sargans (CH); Mueller, Manuel, 7324 Vilters (CH)
(74) Vertreter: Hilti Aktiengesellschaft Corporate Intellectual Property

(57) **Zusammenfassung**

Die Erfindung betrifft einen Rohrträger zum thermisch isolierten Abstützen eines Rohres in einer Rohrschelle (99), mit einem Isolierkörper (2), welcher zumindest ein Schaumstoffmaterial aufweist, und in welchem eine Durchführung (9) für das Rohr ausgebildet ist, wobei der Isolierkörper (2) aus einem ersten Segment (10) und einem zweiten Segment (20) besteht, und mit einer eine Dampfbremse bildenden Folie (30), welche auf den beiden Segmenten (10, 20) angeordnet ist, welche die beiden Segmente (10, 20) zumindest bereichsweise umgibt, und welche ein Scharnier (8) zwischen den beiden Segmenten (10, 20) bildet. Erfindungsgemäss ist vorgesehen, dass in der Folie (30) zumindest eine Stauchzone (51) ausgebildet ist.

## Beschreibung

Die Erfindung betrifft einen Rohrträger zum thermisch isolierten Abstützen eines Rohres in einer Rohrschelle, gemäss dem Oberbegriff des Anspruchs 1. Ein solcher Rohrträger ist ausgestattet mit einem Isolierkörper, welcher zumindest ein Schaumstoffmaterial aufweist, und in welchem eine Durchführung für das Rohr ausgebildet ist, wobei der Isolierkörper aus einem ersten Segment und einem zweiten Segment besteht, und mit einer eine Dampfbremse, insbesondere Wasserdampfbremse, bildenden Folie, welche auf den beiden Segmenten angeordnet ist, welche die beiden Segmente zumindest bereichsweise umgibt, und welche ein Scharnier zwischen den beiden Segmenten bildet.

Ein gattungsgemässer Rohrträger ist aus der DE 8809710 U1 bekannt. Der bekannte Rohrträger besteht aus zwei Hohlzylinderhälften aus Schaumstoffmaterialien, wobei die Hohlzylinderhälften ein Rohr aufnehmen und in eine Rohrschelle eingelegt werden. Auf die Hohlzylinderhälften ist eine Folie aufgebracht, welche eine Dampfbremse bildet. Zugleich bildet die Folie ein Scharnier, welches die beiden Hohlzylinderhälften zum Aufschieben auf das Rohr gelenkig verbindet. Ein weiterer Rohrträger ist aus der EP0503566 B1 bekannt.

Die DE 29819020 U1 offenbart ein Wärmedämmelement für Rohrleitungen mit einem eine Dämmschale umgreifenden Blechmantel, wobei dauerelastische Dichtstreifen auf der Dämmschale derart angeordnet sind, dass sie im Bereich der Ränder des Blechmantels liegen.

Die DE10305312 A1 schlägt vor, dass die Wasserdampfsperre eine Schicht von flexiblem Elastomerschaum aufweist, wodurch ein Eindringen von Wasserdampf in die Dämmummantelung verhindert werden soll. Diese Schicht soll sich unter der Krafteinwirkung einer Befestigungsschelle elastisch verhalten und somit problematische Blasen und Öffnungen, durch die Feuchtigkeit ins Dämmsystem eindringen könnte, verhindern.

Weitere Isolierkörper für Rohre gehen aus der FR 2310524 A1, DE 8601443 U1, US 6460576 A, DE 10039008 A1, DE 20013752 U1, EP 2388505 A2, EP 2476942 A1 und der DE 202010006863 U1 hervor.

Aufgabe der Erfindung ist es, einen Rohrträger anzugeben, der bei geringem Herstellungsaufwand und guter Handhabbarkeit besonders gute thermische Isoliereigenschaften hat und im Betrieb besonders zuverlässig ist.

Die Aufgabe wird erfindungsgemäss durch einen Rohrträger mit den Merkmalen des Anspruchs 1 gelöst. Bevorzugte Ausführungsformen sind in den abhängigen Ansprüchen angegeben.

Ein erfindungsgemässer Rohrträger ist dadurch gekennzeichnet, dass in der Folie zumindest eine Stauchzone, insbesondere zur Aufnahme einer Umfangsreduzierung des Isolierkörpers, ausgebildet ist.

Die Erfindung hat erkannt, dass es bei bekannten Rohrträgern unter Umständen zu unerwünschten Ausbeulungen und Ablösungen der die Dampfbremse bildenden Folie vom Isolierkörper kommen kann, wenn der Rohrträger in die Rohrschelle eingespannt wird. Diese Ausbeulungen und Ablösungen können neben ästhetischen Nachteilen unerwünschte Dampflecks zur Folge haben, die zu einer Verschlechterung der thermischen Isoliereigenschaften und/oder im Extremfall zur Korrosion des in den Rohrträger eingesetzten Rohres führen können. Die Erfindung hat weiterhin erkannt, dass diese Ausbeulungen und Ablösungen auf einer Kompression des Schaumstoffmaterials durch die Rohrschelle beruhen können, die von der in der Regel relativ inkompressiblen Folie nicht nachvollzogen werden kann. Dies hat Spannungen zur Folge, die wiederum dazu führen können, dass sich die Folie ablöst und sodann radial ausweicht und ausbeult. Hier setzt die Erfindung an und sieht in der Folie zumindest eine Stauchzone vor, welche eine spannungsarme oder spannungsfreie Verkürzung der Folie ermöglicht, und welche eine in Umfangsrichtung des Rohrträgers gerichtete Kompression und/oder Verkürzung der Folie gezielt aufnehmen kann. Eine unerwünschte Ausbeulung und gar Ablösung der Folie kann somit in besonders einfacher Weise vermieden oder gezielt in solche Bereiche verlagert werden, in denen kein oder allenfalls ein geringer Dampfdurchgang zu befürchten ist. Unerwünschte Dampflecks und deren negative Folgen können somit in besonders einfacher Weise vermieden werden.

In der Stauchzone weist die Folie zweckmässigerweise eine lokal erhöhte Nachgiebigkeit auf. In der Stauchzone kann das Material der Folie gegenüber benachbarten Folienbereichen lokal geschwächt sein, insbesondere gegenüber zwei in Umfangsrichtung des Rohrträgers auf gegenüberliegenden Seiten der Stauchzone benachbarten Folienbereichen. Die Stauchzone kann Druckkräfte in der Folie, wie sie beim Spannen der Rohrschelle auftreten können, gezielt abbauen und/oder Folienmaterial aus benachbarten Bereichen aufnehmen.

Vorzugsweise hat der Isolierkörper die Form eines Hohlkörpers. Die Folie ist aussenseitig am Isolierkörper, insbesondere auf der Mantelfläche des Isolierkörpers, angeordnet. Zweckmässigerweise ist die Folie auf den Isolierkörper aufkaschiert, insbesondere aufgeklebt. Zwischen der Folie und dem Isolierkörper kann beispielsweise auch noch eine Metallfolie oder ein Metallblech angeordnet sein, was insbesondere im Hinblick auf Langzeitlasten vorteilhaft sein kann. Das Schaumstoffmaterial ist vorzugsweise geschlossenzellig.

Der Isolierkörper weist zwei Spalte auf, welche den Isolierkörper in die beiden Segmente teilen, nämlich einen Scharnierspalt, an welchem das Scharnier angeordnet ist, und einen gegenüberliegenden Verschlussspalt, der zumindest anfangs offen ist und ein radiales Einbringen des Rohres in die Durchführung ermöglicht. Die einzelnen Segmente können ihrerseits aufgeteilt sein, so dass der Isolierkörper mehr als zwei Teilsegmente aufweisen kann, wobei auch zusätzliche Spalte im Isolierkörper vorgesehen sein können, welche die Teilsegmente voneinander trennen.

Die Dampfbremse kann insbesondere eine Wasserdampfbremse sein, und weist als solche vorzugsweise einen höheren Wasserdampfdiffusionswiderstand als das darunterliegende Material auf.

Soweit hier von der Radial-, Axial- und/oder Umfangsrichtung die Rede ist, kann sich dies insbesondere auf die Längsachse des Isolierkörpers und/oder auf die Längsachse der Durchführung für das Rohr beziehen. Bei einer hohlzylindrischen Ausführung des Isolierkörpers kann die Längsachse insbesondere die Hohlzylinderachse sein.

Eine bevorzugte Ausführungsform der Erfindung liegt darin, dass die Stauchzone vollständig auf dem ersten Segment liegt. Demgemäss ist die Stauchzone also insbesondere vom Scharnier und somit vom Scharnierspalt, aber auch vom Verschlussspalt beabstandet. Diese Ausführungsform berücksichtigt, dass der Spalt zwischen den beiden Segmenten häufig vergleichsweise dampfdurchlässig ist. Durch eine beabstandete Anordnung der Stauchzone kann gewährleistet werden, dass die die Dampfbremse bildende Folie an dieser vergleichsweise dampfdurchlässigen Zone ungehindert wirkt, so dass eine besonders gute Dampfdichtigkeit des Gesamtsystems gegeben ist. Darüber hinaus wird die Wirkung des Scharniers durch die Stauchzone nicht beeinträchtigt.

Eine weitere vorteilhafte Ausgestaltung der Erfindung liegt darin, dass das erste Segment ein Stützsegment für das Rohr und einen Dichtstreifen aufweist, wobei der Dichtstreifen zum Abdichten des Stützsegments zwischen dem Stützsegment und der Stauchzone angeordnet ist, und wobei das Material des Dichtstreifens einen höheren Wasserdampfdiffusionswiderstand als das Material des Stützsegments aufweist. Diese Ausführungsform berücksichtigt, dass die Stauchzone die Dampfdichtigkeit der Folie unter Umständen lokal reduzieren kann. Gemäss der Ausführungsform ist an der Stauchzone ein zusätzlicher Dichtstreifen vorgesehen, der dieser Reduktion entgegenwirkt, so dass eine besonders gute Dampfdichtigkeit des Gesamtsystems gegeben ist. Der Dichtstreifen ist vorzugsweise auf dem Untergrund, insbesondere auf dem Stützsegment, aufkaschiert, insbesondere unmittelbar. Der Dichtstreifen ist für eine besonders einfache Herstellung und/oder besonders gute Dampfdichtigkeit vorzugsweise einteilig ausgeführt. Grundsätzlich kann er aber auch mehrteilig ausgeführt sein kann, insbesondere auch mit Unterbrechungen. Vorzugsweise weist das Material des Dichtstreifens eine Wasserdampfdiffusionswiderstandszahl µ grösser 7000 auf. Der Dichtsteifen reicht geeigneterweise bis zum Scharnierspalt.

Der Dichtstreifen ist bevorzugt flexibel, insbesondere dauerelastisch, damit er leichte Stauchungen ausgleichen kann und insbesondere die Wirkung der Stauchzone nicht wesentlich beeinträchtigt. Zweckmässigerweise besteht der Dichtstreifen aus einem Schaumstoffmaterial, vorzugsweise aus einem geschlossenzelligen Schaumstoffmaterial, insbesondere aus einem Elastomerkautschukschaum oder aus einem Polyethylenschaum. Hierdurch kann die erforderliche Flexibilität und Dampfdichtigkeit in besonders einfacher Weise bereitgestellt werden.

Das Stützsegment besteht bevorzugt aus einem Schaumstoffmaterial, vorzugsweise aus einem geschlossenzelligen Schaumstoffmaterial, insbesondere aus einem Polyurethanschaum (PUR) oder einem Polyisocyanuratschaum (PIR). Hierdurch können besonders gute mechanische und thermische Eigenschaften erhalten werden. Da Polyisocyanuratschaum einen vergleichsweise geringen Wasserdampfdiffusionswiderstand und zugleich eine besonders geringe Nachgiebigkeit aufweisen kann, kann bei einem Polyisocyanuratschaum ein erfindungsgemässer Dichtstreifen besonders wirksam sein.

Die Stauchzone kann beispielsweise durch eine Wandstärkenreduktion oder eine Faltung der Folie, insbesondere eine balgartige Faltung der Folie, gebildet sein. Besonders bevorzugt ist es jedoch, dass die Stauchzone durch zumindest eine Durchbrechung in der Folie gebildet ist. Demgemäss ist also zumindest ein folienfreier Zwischenraum, die Durchbrechung, vorgesehen. Entsprechend dieser Ausführungsvariante kann in herstellungstechnisch besonders einfacher Weise eine besonders wirksame und zuverlässige Stauchzone erhalten werden. Die Stauchzone kann durch eine oder mehrere Durchbrechungen gebildet werden, die in einem regelmässigen oder unregelmässigen Muster angeordnet sein können.

Insbesondere kann vorgesehen sein, dass die Stauchzone durch einen Schlitz gebildet wird, der die Folie vollständig durchtrennt. Dies ist herstellungstechnisch besonders vorteilhaft und stellt zugleich eine besonders wirksame Stauchzone zur Verfügung. Der Schlitz kann parallel oder winklig zur Längsachse des Isolierkörpers verlaufen und/oder auch gestuft und/oder mit konvexen oder konkaven Rändern ausgeführt sein. Insbesondere kann der Schlitz die Folie in zwei separate Folienteile teilen. Die beiden separaten Folienteile können vorzugsweise aus demselben Material bestehen und/oder dieselben Eigenschaften aufweisen. Die beiden separaten Folienteile können aber auch aus verschiedenen Materialien bestehen und/oder verschiedene Eigenschaften aufweisen.

Geeigneterweise ist die Stauchzone nahe am Scharnierspalt und somit nahe am Scharnier angeordnet. Hierdurch kann ein Ablösen der Folie in diesem für Dampfdurchgang häufig besonders anfälligen Bereich in besonders einfacher Weise vermieden werden. Demgemäss ist es besonders vorteilhaft, dass die Stauchzone einen an der Längsachse des Isolierkörpers gemessenen Winkelabstand von weniger als 60°, vorzugsweise weniger als 45°, zum Scharnier und/oder Scharnierspalt aufweist. Die Längsachse, welche die Referenz für die Winkelmessung bildet, kann insbesondere durch die Durchführung für das Rohr hindurchlaufen.

Vorzugsweise ist die Folie eine Kunststofffolie, was im Hinblick auf den Herstellungsaufwand und die Beständigkeit vorteilhaft sein kann. Die Folie kann aber auch eine Metallfolie oder eine Verbundfolie, beispielsweise aus Kunststoff und Metall, sein.

Eine weitere bevorzugte Ausgestaltung der Erfindung liegt darin, dass die Folie eine Verschlusslasche zum Verschliessen des Isolierkörpers aufweist, wobei die Verschlusslasche so bemessen ist, dass sie die beiden Segmente unter Ausbildung einer zweiten Stauchzone verschliesst. Demgemäss weist der Rohrträger zumindest zwei Stauchzonen auf, die erste Stauchzone im Bereich des Scharniers und die zweite Stauchzone im Bereich des Verschlussspalts des Rohrträgers. Gemäss dieser Ausführungsform können auch im Bereich des Verschlussspalts unerwünschte Ablösungen der Folie besonders einfach vermieden werden. Insbesondere kann die zweite Verschlusslasche so kurz bemessen sein, dass sie sich nicht mit den benachbarten Folienbereichen überlappt, das heisst die zweite Stauchzone ist vorzugsweise durch einen Schlitz gebildet, der die Folie vollständig durchtrennt.

Vorzugsweise liegt die zweite Stauchzone vollständig auf dem zweiten Segment, ist also insbesondere vom Verschlussspalt, aber auch vom Scharnierspalt beabstandet. Auch an der zweiten Stauchzone kann ein Dichtsteifen vorgesehen sein. Insbesondere kann das zweite Segment ein zweites Stützsegment für das Rohr und einen zweiten Dichtstreifen aufweisen, wobei der zweite Dichtstreifen zum Abdichten des zweiten Stützsegments zwischen dem zweiten Stützsegment und der zweiten Stauchzone angeordnet ist, und wobei das Material des zweiten Dichtstreifens einen höheren Wasserdampfdiffusionswiderstand als das Material des zweiten Stützsegments aufweist. Der zweite Dichtstreifen und das zweite Stützsegment können in Analogie zum weiter oben beschriebenen ersten Dichtstreifen beziehungsweise ersten Stützsegment ausgeführt sein. Aus den schon weiter oben genannten Gründen ist es vorteilhaft, dass die zweite Stauchzone einen an der Längsachse des Isolierkörpers gemessenen Winkelabstand von weniger als 60°, vorzugsweise weniger als 45°, zum Verschlussspalt aufweist. Der zweite Dichtsteifen reicht geeigneterweise bis zum Verschlussspalt.

Insbesondere kann vorgesehen sein, dass die dass die beiden Segmente baugleich ausgeführt sind. Dies kann den Herstellungsaufwand weiter senken.

Beim bestimmungsgemässen Gebrauch ist der Rohrträger in eine Rohrschelle eingelegt und/oder ist durch die Durchführung ein Rohr hindurchgeführt. Der Verschlussspalt ist geeigneterweise durch die Verschlusslasche verschlossen.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung eines ersten Ausführungsbeispiels eines erfindungsgemässen Rohrträgers;
- Figur 2:: eine mittige Querschnittsansicht des Rohrträgers aus Figur 1 mit offener Verschlusslasche;
- Figur 3:: eine Querschnittsansicht entsprechend Figur 2 des Rohrträgers aus Figur 1 mit verschlossener Verschlusslasche;
- Figur 4:: eine Seitenansicht des Rohrträgers aus Figur 1 mit verschlossener Verschlusslasche im Inneren einer Rohrschelle;
- Figur 5:: eine Detailansicht auf die Folie des Rohrträgers aus Figur 1 im Bereich der Stauchzone 51 mit Blickrichtung von aussen;
- Figuren 6 bis 9:: alternative Ausführungsformen von Stauchzonen in der Ansicht von Figur 5;
- Figuren 10 bis 13:: alternative Ausführungsformen von Stauchzonen, jeweils in einer Querschnittsansicht der Folie, mit Blickrichtung entlang der Längsachse des Isolierkörpers;
- Figuren 14 und 15:: eine weitere alternative Ausführungsform einer Stauchzone, in Figur 14 mit Blickrichtung von aussen analog Figuren 5 bis 9 und in Figur 15 in Querschnittsansicht analog Figuren 10 bis 13;
- Figur 16:: eine Querschnittsansicht analog Figur 2 eines zweiten Ausführungsbeispiels eines erfindungsgemässen Rohrträgers.

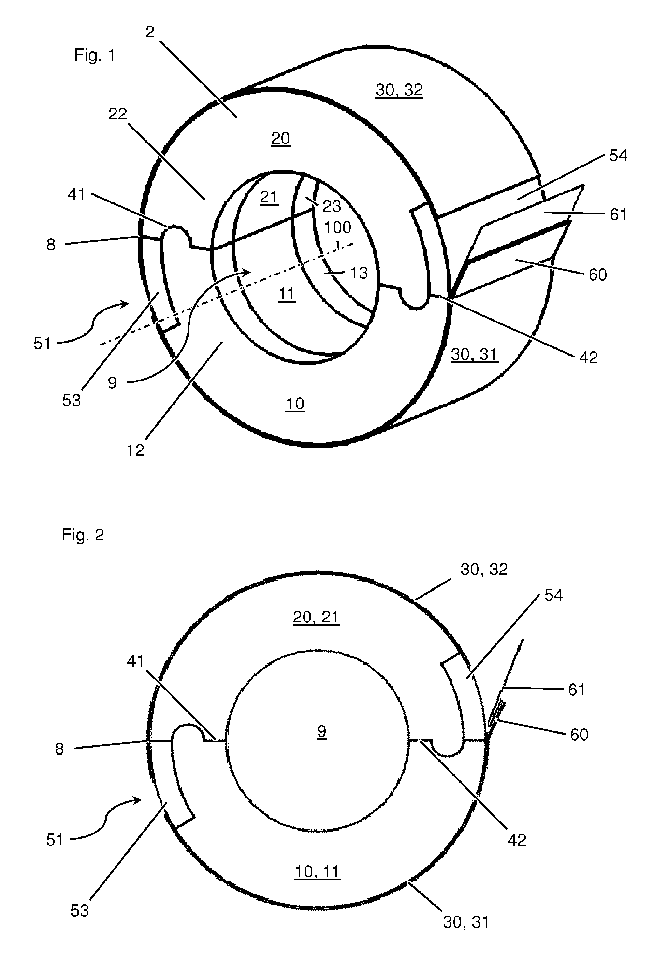

Ein erstes Ausführungsbeispiel eines erfindungsgemässen Rohrträgers ist in den Figuren 1 bis 5 gezeigt. Der Rohrträger weist einen, vorzugsweise hohlzylinderförmigen, Isolierkörper 2 auf, in welchem eine vorzugsweise zylinderförmige Durchführung 9 für ein Rohr ausgebildet ist. Der Rohrträger weist ferner eine Folie 30 auf, welche auf der Aussenseite des Isolierkörpers 2, das heisst auf der Mantelfläche des Isolierkörpers 2, angeordnet ist und mit dem Isolierkörper 2 verbunden ist. Die Folie 30, welche insbesondere eine Kunststofffolie sein kann, bildet eine Dampfbremse, insbesondere Wasserdampfbremse, welche einen radialen Dampfdurchgang, insbesondere Wasserdampfdurchgang, von aussen zur Durchführung 9 und somit zum Rohr hin bremst. Die Folie 30 kann beispielsweise unmittelbar auf den Isolierkörper 2 aufkaschiert sein, oder auch zumindest bereichsweise mittelbar, beispielsweise mit einem zwischenliegenden Metallblech.

Der Isolierkörper 2 besteht im vorliegenden Ausführungsbeispiel aus zwei getrennten Segmenten, nämlich dem ersten Segment 10 und dem zweiten Segment 20. Die beiden Segmente 10 und 20 liegen einerseits an einem Scharnierspalt 41 und andererseits an einem Verschlussspalt 42 aneinander an. Der Scharnierspalt 41 ist radial aussenseitig von der Folie 30 überbrückt. Die Folie 30 bildet somit im Bereich des Scharnierspalts 41 ein Scharnier 8, um welches die beiden Segmente 10, 20 gegeneinander verschwenkt werden können, insbesondere um eine parallel zur Längsachse 100 des Isolierkörpers 2 verlaufende Schwenkachse. Der dem Scharnierspalt 41 gegenüberliegende Verschlussspalt 42 ist im Auslieferungszustand des Rohrträgers offen. Somit kann durch den Verschlussspalt 42 ein Rohr von aussen radial nach innen in die Durchführung 9 eingebracht werden.

Wie insbesondere in Figur 1 erkennbar ist, weist das erste Segment 10 ein Stützsegment 11 zur Kraftübertragung auf das Rohr auf. Dieses Stützsegment 11 besteht zweckmässigerweise aus einem druckfesten, thermisch isolierenden Hartschaum, insbesondere aus einem geschlossenzelligen PUR oder PIR. Das erste Segment 10 weist ferner zwei Anschlusssegmente 12 und 13 auf, die auf entgegengesetzten Stirnseiten des Stützsegments 11 am Stützsegment 11 angeordnet sind und vorzugsweise auf das Stützsegment 11 aufkaschiert sind. Diese Anschlusssegmente 12 und 13 bestehen vorzugsweise aus Weichschaum, insbesondere aus einem Elastomerkautschukschaum, und erlauben eine besonders einfache Anbindung an die Streckenisolierung. Die Folie 30 deckt sowohl das Stützsegment 11 als auch die Anschlusssegmente 12 und 13 aussenseitig ab. Insbesondere ist zumindest das Stützsegment 11 aussenseitig von der Folie 30 abgedeckt, da das Stützsegment 11 eine vergleichsweise hohe Dampfdurchlässigkeit aufweisen kann.

Analog zum ersten Segment weist vorzugsweise auch das zweite Segment 20 ein Stützsegment 21 zur Kraftübertragung auf das Rohr auf, welches zweckmässigerweise aus einem druckfesten, thermisch isolierenden Hartschaum, insbesondere aus einem geschlossenzelligen PUR oder PIR, besteht. Vorzugsweise weist auch das zweite Segment 20 ferner zwei Anschlusssegmente 22 und 23 auf, die auf entgegengesetzten Stirnseiten des zweiten Stützsegments 21 am zweiten Stützsegment 21 angeordnet sind und vorzugsweise auf das Stützsegment 21 aufkaschiert sind. Diese Anschlusssegmente 22 und 23 bestehen vorzugsweise aus Weichschaum, insbesondere aus einem Elastomerkautschukschaum, und erlauben eine besonders einfache Anbindung an die Streckenisolierung. Die Folie 30 deckt sowohl das Stützsegment 21 als auch die Anschlusssegmente 22 und 23 aussenseitig ab. Insbesondere ist zumindest das Stützsegment 21 aussenseitig von der Folie 30 abgedeckt, da das Stützsegment 21 eine vergleichsweise hohe Dampfdurchlässigkeit aufweisen kann.

Im dargestellten Ausführungsbeispiel sind die beiden Segmente 10 und 20 im Wesentlichen baugleich ausgebildet.

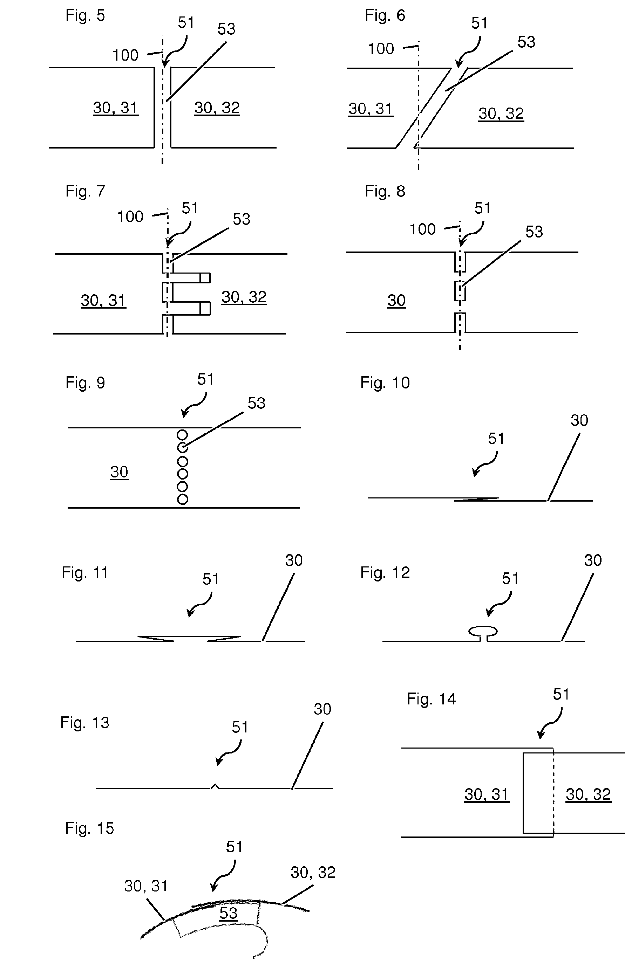

Entsprechend der Erfindung weist die Folie 30 eine erste Stauchzone 51 auf. Wie insbesondere in Figur 5 erkennbar ist, ist diese Stauchzone im der ersten Ausführungsform durch einen Schlitz gebildet, der die Folie 30 vollständig durchtrennt und die Folie 30 dabei in zwei separate Folienteile 31 und 32 teilt. Die als Schlitz ausgebildete Stauchzone 51 ist dabei vollständig auf dem ersten Segment 10 angeordnet, das heisst sie ist insbesondere vom Scharnierspalt 41 beabstandet. Im Bereich der Stauchzone 51 weist der Rohrträger einen Dichtstreifen 53 auf. Dieser Dichtstreifen 53 verläuft aussenseitig am ersten Segment 10 und befindet sich, wie zum Beispiel in Figur 2 erkennbar, insbesondere radial zwischen dem Stützsegment 11 und der Stauchzone 51. Der Dichtstreifen 53 ist weniger dampfdurchlässig als das darunterliegende Stützsegment 11 und dichtet somit das Stützsegment 11 zur Stauchzone 51 hin ab. Der Dichtstreifen 53 besteht vorzugsweise aus Weichschaum, insbesondere aus einem Elastomerkautschukschaum. Wie insbesondere Figur 1 zeigt, reicht der Dichtstreifen 53 axial über das Stützsegment 11 heraus bis zu den beiden entgegengesetzten Stirnseiten des ersten Segments 10. Somit deckt der Dichtstreifen 53 nicht nur das Stützsegment 11, sondern auch die beiden Anschlusssegmente 12 und 13 ab.

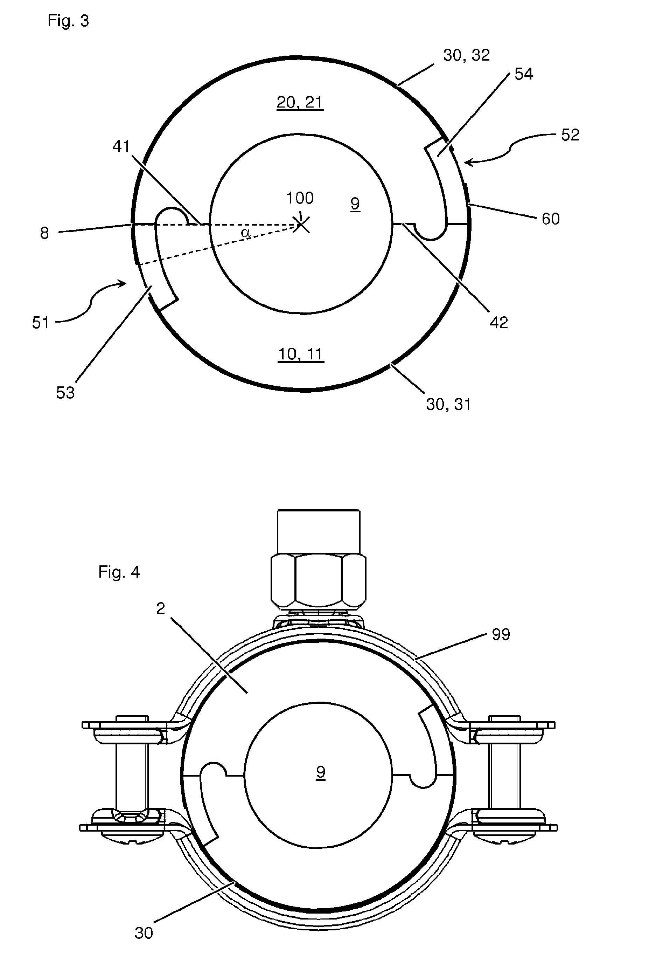

Wie insbesondere Figur 3 zeigt, weist die Stauchzone 51 einen an der Längsachse 100 des Isolierkörpers 2 gemessenen Winkelabstand α zum Scharnier 8 auf, der vorzugsweise kleiner als 60° ist.

Wie insbesondere die Figuren 1 und 2 zeigen, weist die Folie 30, nämlich das überwiegend am ersten Segment 10 angeordnete erste Folienteil 31, eine Verschlusslasche 60 auf. Im geschlossenen Zustand des Isolierkörpers 2, das heisst dann, wenn die beiden Segmente 10 und 20 am Verschlussspalt 42 aneinander anliegen, überlappt die Verschlusslasche 60 das zweite Segment 20. Die Verschlusslasche 60 weist vorzugsweise an ihrer dem zweiten Segment 20 zugewandten Seite eine Klebschicht auf, so dass sie zum Verschliessen des Isolierkörpers 2 am zweiten Segment 20 angeklebt werden kann. Alternativ kann der Klebstoff auch nachträglich aufgebracht werden. Im Auslieferungszustand weist die Verschlusslasche 60 vorzugsweise eine abziehbare Schutzfolie 61 für die Klebschicht auf. Wie insbesondere Figur 2 zeigt, kann diese Schutzfolie 61 um eine, vorzugsweise parallel zur Längsachse 100 verlaufende, Achse zurückgefaltet sein, so dass eine freie Grifflasche gebildet ist, welche an ihrem freien Ende über die Verschlusslasche 60 übersteht. In einer alternativen Ausführungsform kann die Achse, um welche die Schutzfolie 61 zurückgefaltet ist, auch schräg, insbesondere senkrecht, zur Längsachse 100 verlaufen. Insbesondere kann dann die freie Grifflasche stirnseitig am Rohrträger vorstehen.

Der verschlossene Zustand des Rohrträgers mit angeklebter Verschlusslasche 60 ist in Figur 3 gezeigt. Wie Figur 3 zeigt, ist die Verschlusslasche 60 so dimensioniert, dass sie auch bei geschlossenem Rohrträger, das heisst dann, wenn die beiden Segmente 10 und 20 am Verschlussspalt 42 und vorzugsweise auch am Scharnierspalt 41 aneinander anliegen, nicht bis zum zweiten Folienteil 32 reicht. Somit wird beim Ankleben der Verschlusslasche 60 eine zweite als Schlitz ausgebildete Stauchzone 52 der Folie 30 ausgebildet. Diese Stauchzone liegt vollständig auf dem zweiten Segment 20. Wie die Figuren 1 bis 3 zeigen, weist der Rohrträger im Bereich der zweiten Stauchzone 52 einen zweiten Dichtstreifen 54 auf. Dieser zweite Dichtstreifen 54 verläuft aussenseitig am zweiten Segment 20 und befindet sich, wie in Figur 2 erkennbar, insbesondere radial zwischen dem Stützsegment 21 des zweiten Segments 20 und der zweiten Stauchzone 52. Der zweite Dichtstreifen 54 ist weniger dampfdurchlässig als das darunterliegende zweite Stützsegment 21 und dichtet somit das zweite Stützsegment 21 zur zweiten Stauchzone 52 hin ab. Der zweite Dichtstreifen 54 besteht vorzugsweise aus Weichschaum, insbesondere aus einem Elastomerkautschukschaum. Wie insbesondere Figur 1 zeigt, reicht der zweite Dichtstreifen 54 axial über das zweite Stützsegment 21 heraus bis zu den beiden entgegengesetzten Stirnseiten des zweiten Segments 20. Somit deckt der Dichtstreifen 54 nicht nur das Stützsegment 21, sondern auch die beiden Anschlusssegmente 22 und 23 ab.

Der Gebrauchszustand des Rohrträgers in einer Rohrschelle 99 ist in Figur 4 gezeigt.

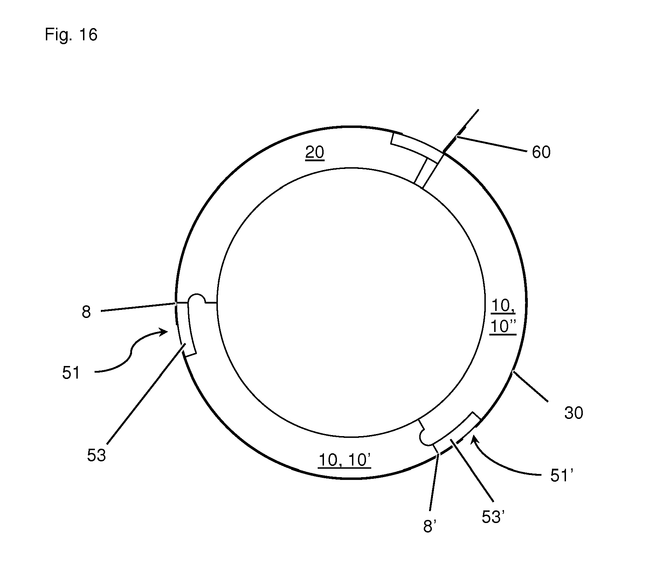

Die Figuren 6 bis 15 zeigen alternative Ausgestaltungen von Stauchzonen, die bei der Ausführungsform des Rohrträgers gemäss Figuren 1 bis 5, bei der Ausführungsform des Rohrträgers gemäss Figur 16 oder bei alternativen Ausführungsformen eines erfindungsgemässen Rohrträgers zum Einsatz kommen können.

Beim Ausführungsbeispiel der Figur 6 ist die Stauchzone 51 ebenso wie beim Ausführungsbeispiel der Figur 5 durch einen Schlitz gebildet, welcher die Folie 30 vollständig durchtrennt, wobei der Schlitz beim Ausführungsbeispiel der Figur 6 entgegen dem Ausführungsbeispiel der Figur 5 nicht parallel, sondern winklig zur Längsachse 100 des Isolierkörpers 2 verläuft.

Auch beim Ausführungsbeispiel der Figur 7 ist die Stauchzone 51 durch einen Schlitz gebildet, wobei am ersten Folienteil 31 zusätzliche Finger ausgebildet sind, die in korrespondierende Aussparungen im zweiten Folienteil 32 ragen.

Bei den Ausführungsbeispielen der Figuren 8 und 9 ist die Stauchzone 51 jeweils durch eine Vielzahl von Durchbrechungen in der Folie 30 gebildet, das heisst durch eine Perforierung der Folie 30. Die Folie 30 wird in diesen Fällen von der Stauchzone 51 nicht vollständig getrennt.

Bei den Ausführungsbeispielen der Figuren 10 bis 13 ist die Stauchzone 51 jeweils durch eine Faltung gebildet, die im Fall der Figur 10 Z-förmig, im Fall der Figuren 11 und 12 Ωförmig und im Fall der Figur 13 dreieckig ausgebildet ist.

Beim Ausführungsbeispiel der Figuren 14 und 15 ist die Stauchzone 51 ebenso wie beim Ausführungsbeispiel der Figur 5 durch einen Schlitz gebildet, welcher die Folie 30 unter Bildung zweier Folienteile 31 und 32 vollständig durchtrennt. Im Gegensatz zum Ausführungsbeispiel der Figur 5 sind die beiden Folienteile gemäss Figuren 14 und 15 jedoch in der Stauchzone 51 nicht beabstandet, sondern sie überlappen sich und berühren sich vorzugsweise, wobei gegebenenfalls auch eine schwache Verklebung zwischen den Folienteilen 31 und 32 vorgesehen sein kann. Durch die Teilung der Folie 30 und die reduzierten Klebeeigenschaften zwischen den Folienteilen 31 und 32 schieben sich die Folienteile 31 und 32 übereinander und gleichen so die Umfangsreduktion aus. Durch die Anordnung des Dichtstreifens 53, insbesondere aus dauerelastischem Schaum, direkt unterhalb der Überlappung wird ein zu grosser Anpressdruck von der Rohrschelle auf Folie 30 und das Stützsegment vermieden. Dadurch wird das Abgleiten der Folienteile 31 und 32 aufeinander begünstigt.

Die Stauchzonen 51 der Figuren 7 bis 13 können parallel oder in einem Winkel zur Längsachse 100 verlaufen. Die Stauchzonen 51 der Figuren 7 bis 9 können zusätzlich auch eine nicht dargestellte Faltung aufweisen. Die Stauchzonen 51 der Figuren 10 bis 13 können zusätzlich auch eine nicht dargestellte Perforierung aufweisen.

Ein zweites Ausführungsbeispiel eines erfindungsgemässen Rohrträgers ist in Figur 16 dargestellt. Das Ausführungsbeispiel entspricht im Wesentlichen der Variante aus den Figuren 1 bis 5, so dass insoweit auf die dortige Beschreibung verwiesen werden kann. Das Ausführungsbeispiel der Figur 16 unterscheidet sich vom Ausführungsbeispiel der Figuren 1 bis 5 im Wesentlichen dadurch, dass beim Ausführungsbeispiel der Figur 16 das erste Segment 10 zweigeteilt mit zwei Teilsegmenten 10' und 10" ausgebildet ist. Zwischen den beiden Teilsegmenten 10' und 10" ist ein weiteres Scharnier 8' mit einer weiteren Stauchzone 51' und einem weiteren Dichtstreifen 53' angeordnet. Diese Elemente sind in Analogie zur ersten Stauchzone 51 des Ausführungsbeispiels der Figuren 1 bis 5 ausgeführt, so dass bezüglich Details auf die dortigen Ausführungen verwiesen wird.

## Patentansprüche

1. Rohrträger zum thermisch isolierten Abstützen eines Rohres in einer Rohrschelle (99), mit
einem Isolierkörper (2), welcher zumindest ein Schaumstoffmaterial aufweist, und in welchem eine Durchführung (9) für das Rohr ausgebildet ist, wobei der Isolierkörper (2) aus einem ersten Segment (10) und einem zweiten Segment (20) besteht,
und mit einer eine Dampfbremse bildenden Folie (30), welche auf den beiden Segmenten (10, 20) angeordnet ist, welche die beiden Segmente (10, 20) zumindest bereichsweise umgibt, und welche ein Scharnier (8) zwischen den beiden Segmenten (10, 20) bildet,
**dadurch gekennzeichnet,**
**dass** in der Folie (30) zumindest eine Stauchzone (51) ausgebildet ist.

2. Rohrträger nach Anspruch 1,
**dadurch gekennzeichnet,**
**dass** die Stauchzone (51) vollständig auf dem ersten Segment (10) liegt.

3. Rohrträger nach Anspruch 2,
**dadurch gekennzeichnet,**
**dass** das erste Segment (10) ein Stützsegment (11) für das Rohr und einen Dichtstreifen (53) aufweist, wobei der Dichtstreifen (53) zum Abdichten des Stützsegments (11) zwischen dem Stützsegment (11) und der Stauchzone (51) angeordnet ist, und wobei das Material des Dichtstreifens (53) einen höheren Wasserdampfdiffusionswiderstand als das Material des Stützsegments (11) aufweist.

4. Rohrträger nach Anspruch 3,
**dadurch gekennzeichnet,**
der Dichtstreifen (53) aus einem Schaumstoffmaterial, insbesondere aus einem Elastomerkautschukschaum oder aus einem Polyethylenschaum, besteht.

5. Rohrträger nach einem der vorstehenden Ansprüche,
**dadurch gekennzeichnet,**
**dass** die Stauchzone (51) durch zumindest eine Durchbrechung in der Folie (30) gebildet ist.

6. Rohrträger nach einem der vorstehenden Ansprüche,
**dadurch gekennzeichnet,**
**dass** die Stauchzone (51) durch einen Schlitz gebildet wird, der die Folie (30) vollständig durchtrennt.

7. Rohrträger nach einem der vorstehenden Ansprüche,
**dadurch gekennzeichnet,**
**dass** die Stauchzone (51) einen an der Längsachse (100) des Isolierkörpers (2) gemessenen Winkelabstand (α) von weniger als 60° zum Scharnier (8) aufweist.

8. Rohrträger nach einem der vorstehenden Ansprüche,
**dadurch gekennzeichnet,**
**dass** die Folie (30) eine Kunststofffolie ist.

9. Rohrträger nach einem der vorstehenden Ansprüche,
**dadurch gekennzeichnet,**
**dass** die Folie (30) eine Verschlusslasche (60) zum Verschliessen des Isolierkörpers (2) aufweist, wobei die Verschlusslasche (60) so bemessen ist, dass sie die beiden Segmente (10, 20) unter Ausbildung einer zweiten Stauchzone (52) verschliesst.

10. Rohrträger nach einem der vorstehenden Ansprüche,
**dadurch gekennzeichnet,**
**dass** die beiden Segmente (10, 20) baugleich ausgeführt sind.

11. Rohrträger nach einem der vorstehenden Ansprüche,
**dadurch gekennzeichnet,**
**dass** er in eine Rohrschelle (99) eingelegt ist und dass durch die Durchführung (9) ein Rohr hindurchgeführt ist.
